# EUROPÄISCHE PATENTSCHRIFT

(11) **EP 2 808 070 B1**
(45) Veröffentlichungstag und Bekanntmachung des Hinweises auf die Patenterteilung: **05.04.2017**
(21) Anmeldenummer: 14153807.4
(22) Anmeldetag: 04.02.2014
(51) Int. Cl.: B01D 35/06, B01D 24/16, B01D 24/46

(54) **Heizungsfilter**
Heating filter
Filtre de chauffage

(30) Priorität: 11.04.2013 DE 102013103648; 26.07.2013 DE 102013108037
(43) Veröffentlichungstag der Anmeldung: 03.12.2014
(73) Patentinhaber: HANS SASSERATH & CO KG, 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 2 407 225
- DE-U1-202009 000 084
- DE-U1-202010 005 367
- US-A1- 2011 056 890

## Beschreibung

### Technisches Gebiet

Die Erfindung betrifft einen rückspülbarer Heizungsfilter mit den Merkmalen des Oberbegriffs des Anspruchs 1.

In einem Heizungssystem wird Wasser in einem geschlossenen Kreislauf umgepumpt. Das Wasser wird erwärmt und zu den Heizkörpern geleitet. Dort gibt es seine Wärme ab. Anschließend wird es wieder zurück zur Heizung geleitet. Moderne Heizkörper und Wärmetauscher sollen möglichst kompakt ausgeführt werden. Die Anlagen sind dann zwar leistungsfähig, aber auch empfindlicher gegenüber Schmutz, Kalk und Gas, insbesondere Luft.

### Stand der Technik

Es ist bekannt, Wasser für geschlossene Heizkreisläufe zu reinigen, bevor sie in den Heizkreislauf eingespeist werden. Hierzu wird das Wasser separat entkalkt und gefiltert.

Aus der EP 0 742 038 A2 ist eine Anordnung bekannt, bei der suspendierte Korrosionsprodukte und sonstige partikelförmige Verunreinigungen aus Heizwasserkreisläufen entfernt werden. Die Anordnung weist als Filtereinsatz eine Bürste auf. Die Bürste ist innerhalb des Kreislaufs angeordnet. Die Bürste weist einen Schaft auf, von dem Faserbündel abstehen. Partikel bleiben in dem Faserbündel hängen. Zur Reinigung der Bürste sind Abstreifelemente innerhalb des Gehäuses vorgesehen. Durch eine Relativbewegung zwischen den Faserbündeln und den Abstreifelementen werden die Partikel gelöst. Zum Reinigen des Filters müssen mehrere Griffe und Hähne betätigt werden. Dadurch ist die Anordnung vergleichsweise komplex. Nachteilig bei der bekannten Anordnung ist es auch, dass diese blockieren kann.

US 5 490 874 offenbart eine Einrichtung zum Entgasen von Flüssigkeiten. Die Einrichtung weist eine Kammer, in welcher eine Bürste mit Stahlborsten angeordnet ist. Am oberen Ende der Kammer ist ein Entlüftungsventil vorgesehen. Die Kammer wird von der Flüssigkeit durchflossen. In der Flüssigkeit enthaltenes Gas sammelt sich an der Bürste, bis sich Blasen bilden, die bei Vibration der Borsten nach oben aufsteigen.

DE 202009000084 U1 der Anmelderin offenbart einen Heizungsfilter mit Rückspülung. Der Filter umfasst eine Filtertasse. In der Filtertasse ist eine Filterhülse angeordnet. In der Filterhülse befindet sich Filtermaterial in Form einer Stahlbürste. Zwischen Filtertasse und Filterhülse ist ein Zwischenraum gebildet. Das Wasser fließt im Betriebszustand vom Einlass durch den Zwischenraum nach unten. Dort gelangt es zum Filtern in den Innenraum der Filterhülse und fließt wieder nach oben zum Auslass. Die bekannte Anordnung verwendet einen Magneten zur Entfernung von metallischen Partikeln, der in der Strömung vor dem Filtermaterial sitzt. Wenn der am unteren Ende der Filtertasse befindlicher Ablauf geöffnet wird, wird die Filterhülse aufgrund der Druckverhältnisse nach unten bewegt. Der Übergang vom Zwischenraum zum Innenraum der Filterhülse im unteren Bereich wird blockiert. Am oberen Ende der Filterhülse wird eine Passage freigegeben, über welche Heizungswasser von oben in den Innenraum der Filterhülse fließt. Beim Rückspülen wird so die Strömung in dem Filter umgekehrt. Schmutzpartikel werden von der Bürste mitgerissen und durch den Ablauf nach unten ausgespült. Die Verwendung der Bürste kann zur Verstopfung des Filters führen und bewirkt mit der Zeit einen unerwünschten Druckabfall. Nachteilig bei der Anordnung ist es ferner, dass Heizungswasser in der Rückspülstellung nicht nur in den Filter, sondern auch zurück in den Heizkreislauf gelangen kann. Schließlich ist die Filterkapazität des Magneten leicht erschöpft, da auch grobe Partikel an dem Magneten hängen bleiben können.

DE 20 2010 005 367 U1 offenbart einen Teichfilter mit verwirbelbarem Filtermaterial in Form von kleinen Kügelchen. Wasser wird vom Einlass durch einen im Zentrum des Filters angeordneten, vertikalen Kanal nach unten geleitet und durchströmt auf dem Weg nach oben zum Auslass das Filtermaterial. Zum Rückspülen wird Frischwasser aus einem zusätzlichen Frischwasseranschluss gezapft und durch das Filtermaterial geleitet. Dafür ist der Frischwasserkanal mit radialen Verzweigungen versehen, die innerhalb des Filtermaterials münden und kleine Öffnungen aufweisen. Das Frischwasser tritt so an mehreren Stellen gleichzeitig aus den Verzweigungen in das Filtermaterial ein.

EP 2 407 225 A1 offenbart einen rückspülbaren Heizungsfilter, der in die Rohrleitung eines Heizungskreislaufs eingebaut wird. Zum Rückspülen wird Wasser in umgekehrter Richtung durch den Filter geleitet. Hierzu wird werden Ventile eingesetzt, mit den Frischwasser vom Einlass zum Auslass geleitet wird. Bei dieser Anordnung muss der Heizukreislauf zum Rückspülen unterbrochen werden.

US 2011/0056890 offenbart einen Filter für Sturmwasser.

### Offenbarung der Erfindung

Es ist Aufgabe der Erfindung, einen kostengünstigen, wartungsarmen und rückspülbaren Heizungsfilter zu schaffen, mit dem unerwünschte Schmutzpartikel effektiver aus dem Heizkreislauf entfernt werden können.

Erfindungsgemäß wird die Aufgabe mit einem Heizungsfilter mit den Merkmalen des Kennzeichens des Anspruchs 1 gelöst. Dabei ist vorgesehen, dass das Filtermaterial von einem Granulat, von Kügelchen oder anderem verwirbelbaren Material gebildet ist, dessen Dichte geringer als die Dichte von Wasser ist, so dass das Material an der Wasseroberfläche schwimmt, und in der Rückspülstellung die Verbindung von der Frischwasserversorgung zum Heizkreislauf unterbrochen ist.

Dadurch wird eine besonders effektive Rückspülung erreicht. Das gesamte Frischwasser wird bei der Rückspülung durch das Filtermaterial geleitet und kann nicht in den Heizkreislauf gelangen. Durch den starken Strom wird eine Verwirbelung des Filtermaterials bewirkt. Bei der Verwirbelung werden die Partikel besonders gut vom Filtermaterial getrennt und durch den Ablauf ausgespült. Der Übergang vom Zwischenraum zum Innenraum der Filterhülse ist in der Rückspülstellung blockiert. Die Verbindung zwischen Frischwasserzufuhr und Einlass ist ebenfalls blockiert. Es kann kein Wasser aus dem Heizkreislauf abfließen. Das bedeutet, dass der Heizkreislauf auch am Auslass hydraulisch blockiert ist. Es kann kein Wasser über den Auslass in den Heizkreislauf gelangen.

Der Wasserstrom aus dem Heizkreislauf kann dadurch unterbrochen werden, dass ein unterer Anschlag von einer nach innen vorspringenden, umlaufenden Ringschulter auf der Innenseite des Gehäuses gebildet ist, auf welcher der untere Rand der Filterhülse in der Rückspülstellung aufliegt. Die Filterhülse wird in der Rückspülstellung nach unten bewegt, bis der untere Rand auf der Ringschulter aufliegt. Dadurch wird die Verbindung zwischen dem Zwischenraum und dem Innenraum der Filterhülse unterbrochen. Es kann kein Heizungswasser mehr in die Filterhülse hineinfließen. Das gesamte Frischwasser fließt in umgekehrter Richtung durch die Filterhülse zum Ablauf.

Bei einer vorteilhaften Ausgestaltung der Erfindung ist vorgesehen, dass die Filterhülse einen Doppelsitz bildet, mit dem in der Betriebsstellung die Verbindung zwischen Einlass und Auslass und in der Rückspülstellung die Verbindung zwischen Einlass und Frischwasserversorgung blockierbar ist. Dabei kann insbesondere
(a) der mit dem Heizkreislauf verbundene Einlass seitlich am Gehäuse vorgesehen sein und im Zwischenraum zwischen Filterhülse und Gehäuse münden,
(b) die Passage von der Frischwasserversorgung zum Innenraum der Filterhülse oberhalb des Einlasses angeordnet sein, und
(c) der Doppelsitz der Filterhülse von zwei beabstandeten, umlaufenden, nach außen vorspringenden Rändern gebildet sein, von denen der eine axial im Bereich des Einlasses unterhalb der Passage und der andere am oberen Ende der Filterhülse im Bereich der Passage angeordnet ist.

In der Betriebsstellung ist die Filterhülse in einer oberen Position. Dann liegt der untere der beiden umlaufenden Ränder zwischen dem Einlass und der Passage für das Frischwasser am Gehäuseanschlag an. Es kann kein Frischwasser in die Anordnung gelangen. Die Verbindung zwischen Einlass und Auslass führt über das Filtermaterial. In der Rückspülstellung wird die Filterhülse nach unten bewegt bis der obere der beiden umlaufenden Ränder am Anschlag zwischen Passage und Einlass anliegt. Der untere der beiden umlaufenden Ränder wird nach unten mitgenommen und öffnet die Passage. Frischwasser fließt von oben in umgekehrter Richtung durch das Filtermaterial in der Filterhülse. Gleichzeitig ist die Verbindung zwischen Passage und Einlass vom oberen Rand blockiert.

Vorzugsweise ist ein im wesentlichen zylindrisches Sieb zum Zurückhalten des Filtermaterials im Innenraum der Filterhülse angeordnet. Die zylindrische Siebform hat den Vorteil, dass ein freier Hohlraum stromabwärts des Filtermaterials im Filter gebildet wird. Dort kann ein Magnet vorgesehen sein, dessen Magnetfeld sich in den Bereich stromabwärts des Filtermaterials erstreckt. Es versteht sich, dass auch eine andere Siebform möglich ist, wenn der Magnet an anderer Stelle angeordnet ist. Die vorliegende Ausgestaltung benötigt aber besonders wenig Raum. Es kann eine nicht abschirmende Schutzhülle vorgesehen sein, in welche der Magnet von außen lösbar einsteckbar ist. Das hat den Vorteil, dass der Magnet trocken gelagert wird und nicht rostet. Außerdem ist der Magnet jederzeit von außen zugänglich. Das gefilterte Wasser fließt im Betriebszustand an der Schutzhülle mit dem Magnet im Inneren vorbei. Dabei haften magnetisierbare Partikel an und werden dem Wasser entzogen. Zum Reinigen der Anordnung wird der Magnet von außen aus der Schutzhülle entfernt. Dann fallen die anhaftenden Partikel ab. Während der Rückspülung werden die Partikel anschließend nach außen gespült. Die Lage des Magneten stromabwärts des Filtermaterials hat den Vorteil, dass nur feine Partikel angezogen werden, die das Filtermaterial passiert haben. Grobe Partikel werden bereits vom Filtermaterial zurückgehalten. Auf diese Weise dauert es länger, bis die Schutzhülle des Magneten mit Partikeln bedeckt ist.

In einer besonders bevorzugten Ausgestaltung der Erfindung ist vorgesehen, dass eine Entlüftung mit einer Öffnung im oberen Bereich des Gehäuses vorgesehen ist. Gas steigt nach oben und kann über die Entlüftung nach außen abweichen. Dabei kann die Öffnung der Entlüftung durch einen Schwimmer aktivierbar sein, welcher von der Schutzhülle axialbeweglich geführt wird. Wenn der Schwimmer nach unten bewegt wird, wird ein Hebel bewegt, der die Öffnung öffnet.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist ein vertikaler Querschnitt durch einen Heizungsfilter in Betriebsstellung entlang einer Schnittebene A-A
- Fig.2: ist ein vertikaler Querschnitt durch den Heizungsfilter aus Figur 1 entlang einer zur Schnittebene A-A um einen Winkel von 90 Grad versetzten Schnittebene B-B.
- Fig.3: ist ein horizontaler Querschnitt durch den Heizungsfilter aus Figur 1 in der Ebene C-C
- Fig.4: ist eine perspektivische Darstellung einer Filterhülse für den Heizungsfilter aus Figur 1.
- Fig.5: ist eine perspektivische Darstellung eines Siebs für den Heizungsfilter aus Figur 1.
- Fig.6: ist eine perspektivische Explosionsdarstellung des Heizungsfilters aus Figur 1.
- Fig.7: zeigt den Heizungsfilter aus Figur 1 in Rückspülstellung.
- Fig.8: ist ein Ausschnitt aus Figur 2 und illustriert die Entlüftung des Heizungsfilters.
- Fig.9: ist ein vertikaler Querschnitt durch einen Heizungsfilter in Betriebsstellung entlang einer Schnittebene A-A entsprechend eines zweiten Ausführungsbeispiels.
- Fig.10: ist ein horizontaler Querschnitt durch den Heizungsfilter aus Figur 9 entlang der Schnittebene X-X
- Fig.11: ist eine perspektivische Darstellung einer Filterhülse für den Heizungsfilter aus Figur 9.
- Fig.12: ist eine perspektivische Explosionsdarstellung des Heizungsfilters aus Figur 1.
- Fig.13: zeigt den Heizungsfilter aus Figur 9 in Rückspülstellung.
- Fig.14: ist ein Ausschnitt aus Figur 9 und illustriert die Entlüftung des Heizungsfilters.

### Beschreibung der Ausführungsbeispiele

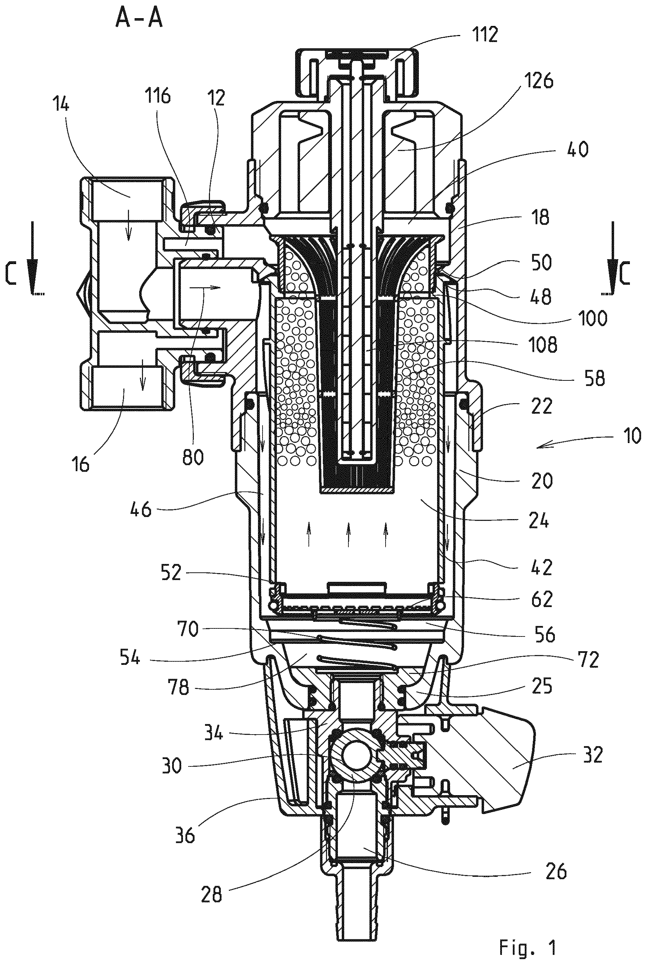

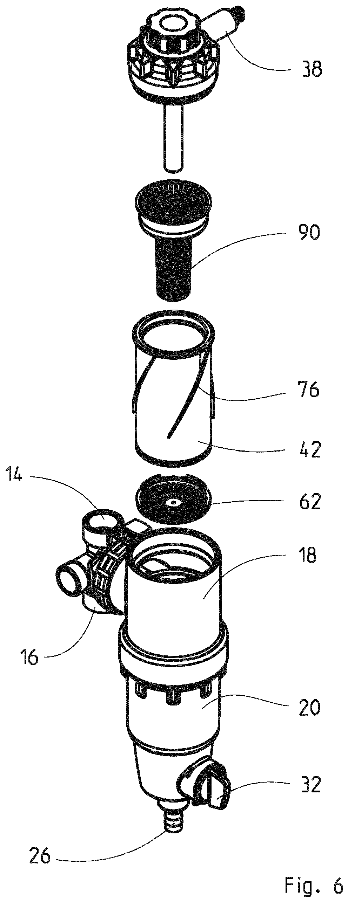

### 1. Ausführungsbeispiel Figuren 1 bis 8

Figur 1 zeigt einen Heizungsfilter, der allgemein mit 10 bezeichnet ist. Der Heizungsfilter 10 wird mit einem Anschlussflansch 12 an einen (nicht dargestellten) geschlossenen Heizkreislauf angeschlossen. Der Anschlussflansch 12 weist einen Einlass 14 auf. Der Einlass 14 wird mit der Rohrleitung des Heizkreislaufs verbunden. Koaxial zum Einlass 14 ist ein Auslass 16 vorgesehen. Der Auslass 16 wird über einen geeigneten Anschlussflansch ebenfalls mit der Rohrleitung des Heizkreislaufs verbunden. Der Heizkreislauf ist ansonsten abgeschlossen. Er weist eine Pumpe auf, mit welcher das Heizungswasser in dem Kreislauf umgepumpt wird. Wasserverluste werden über eine geeignete Füll- und Nachfüllarmatur ausgeglichen.

Einlass 14 und Auslass 16 münden in einem Filtergehäuse 18. Das Filtergehäuse 18 ist mittels eines Gewindes 22 auf ein unteres Gehäuseteil 20 aufgeschraubt. Der von dem Filtergehäuse 18 und dem unteren Gehäuseteil 20 gebildete Hohlraum 24 ist im wesentlichen zylindrisch mit vertikaler Achse. Im Boden 25 des unteren Gehäuseteils 20 ist ein Ablauf 26 gebildet. Der Ablauf 26 ist mit einem Kugelventil 28 verschließbar. Das Kugelventil 28 umfasst eine Kugel 30, welche mittels eines Stellgriffs 32 um eine horizontale Achse in der Darstellungsebene drehbar ist. Das Kugelventil 28 ist in ein eigenes Bauteil 34 integriert, welches mittels eines Einsatzes 72 am unteren Gehäuseteil 20 befestigt ist.

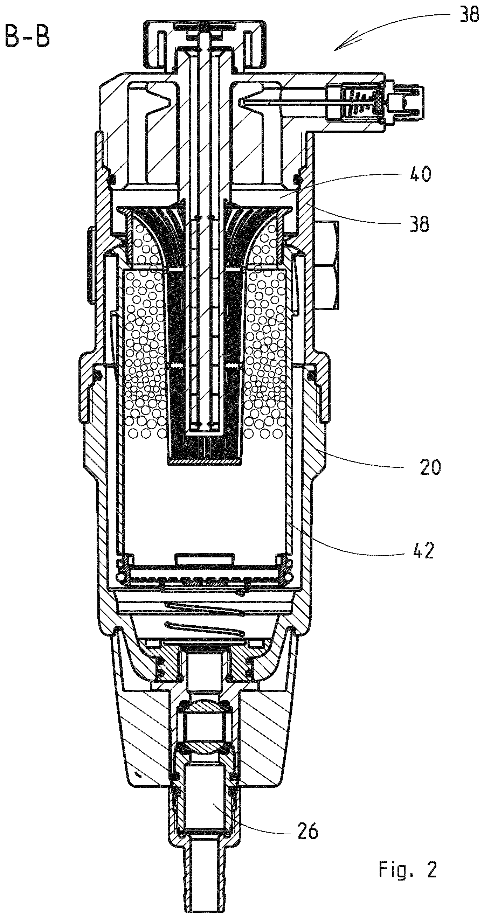

Im oberen Bereich des Filtergehäuses 18 ist ein Entlüftungsventil in Form eines Schnellentlüfters 38 vorgesehen. Dies ist in Figur 2 dargestellt. Gas, welches sich in der mit dem Auslass verbundenen Kammer 40 sammelt, kann auf diese Weise an die Atmosphäre abgegeben werden.

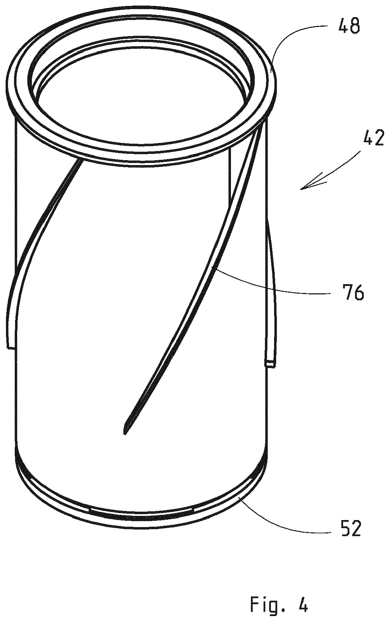

Innerhalb des Filtergehäuses 18 und des unteren Gehäuseteils 20 ist koaxial eine Filterhülse 42 angeordnet. Die Filterhülse 42 ist im wesentlichen zylindrisch. Die Filterhülse ist in Figur 4 noch einmal gesondert dargestellt. Am oberen Ende 44 ist die Filterhülse 42 mit einem umlaufenden, nach außen vorspringenden Rand 48 versehen. Der Durchmesser der Filterhülse 42 ist so ausgebildet, dass ein Zwischenraum 46 zwischen der Innenwandung des Filtergehäuses 18 bzw. dem unteren Gehäuseteil 20 und der Außenwandung der Filterhülse 42 gebildet ist. Die Filterhülse 42 ist in axialer Richtung etwas kürzer als die Länge des von dem Filtergehäuse 18 und dem unteren Gehäuseteil 20 gebildeten Hohlraum 24. In der in Figur 1 dargestellten Betriebsstellung liegt die Filterhülse 42 mit dem oberen Rand 48 an einem Anschlag 50 an. Es kann kein Wasser direkt vom Einlass zum Auslass fließen. Die Strömung ist an dieser Stelle unterbrochen. Alles Wasser fließt vom Einlass 14 durch den Filter zum Auslass 16.

Zwischen dem unteren Rand 52 der Filterhülse 42 und einer Ringschulter 54 im unteren Gehäuseteil 20 ist in der Betriebsstellung, die in Figur 1 dargestellt ist, ein Übergang 56 gebildet. Wasser, welches vom Einlass 14 in das Gehäuse fließt, fließt also durch den Zwischenraum 46, der die Form eines Ringraums hat, nach unten und durch den Übergang 56 von unten in die Filterhülse 42. In der Filterhülse 42 ist ein Filtermaterial aus verwirbelbarem Filtermaterial in Form von Granulat 58 angeordnet. Das Granulat 58 besteht aus vielen kleinen Kunststoffkügelchen geringer Dichte, die im Wasser an der Oberfläche schwimmen. Unter der Bezeichnung "Ultrabead" vertreibt die Beyersdörfer GmbH auf der Internetseite www.koiteich.de einen Teichfilter mit Filtermaterial in Form von schwimmenden Filterkugeln, die als "beads" bezeichnet werden. Derartige Beads werden im vorliegenden Ausführungsbeispiel als Filtermaterial verwendet. Ihre Wirkung ist aus dem Stand der Technik bekannt und braucht hier daher nicht näher beschrieben werden.

Im unteren Bereich der Filterhülse 42 ist eine Lochplatte 62 eingefügt. Mit der Lochplatte 62 wird das Filtermaterial während des Rückspülvorgangs zurückgehalten. An Unterseite der Lochplatte 62 stützt sich eine Feder 70 ab. Als Federwiderlager für die Feder 70 dient ein Einsatz 72 im unteren Gehäuseteil 20. Die Feder 70 drückt die Anordnung mit der Lochplatte und der Filterhülse 42 nach oben.

Auf der Außenseite der Filterhülse 42 sind Rippen 76 angeformt. Diese sind in Figur 4 gut zu erkennen. Die Rippen 76 verlaufen auf der Außenseite der Filterhülse 42 schraubenlinienförmig nach unten um die Filterhülse 42 herum. Die Strömung vom Einlass nach unten wird auf diese Weise etwas in Rotation um die gemeinsame Symmetrieachse der Komponenten versetzt. Grobe Partikel werden dadurch nach außen und unten geschleudert. Sie sammeln sich oberhalb des Ablaufs in dem Hohlraum 78, in welchem auch die Feder 70 angeordnet ist. Schwerere Teilchen werden dabei bereits vor Erreichen des Filtermaterials aufgrund der Zentrifugalkraft an die Gehäusewandung gedrückt und sammeln sich dort. Sie sind dann leichter zu entfernen.

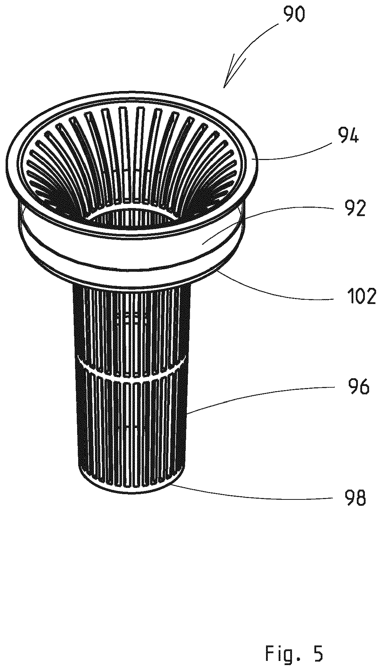

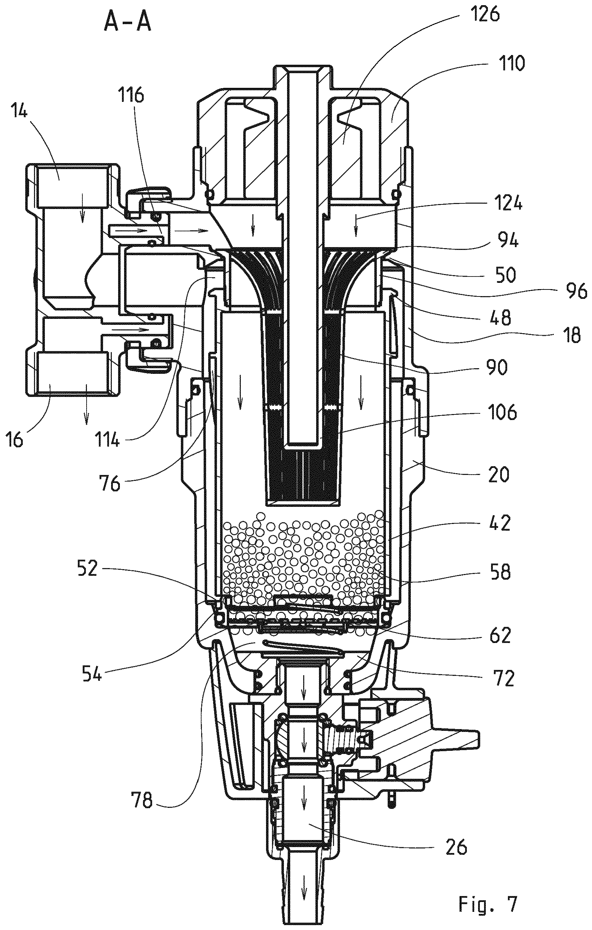

In die Filterhülse 42 ist ein Siebeinsatz 90 eingesteckt. Der Siebeinsatz 90 ist in Figur 5 im Detail gesondert dargestellt. Der Siebeinsatz 90 besteht im vorliegenden Fall aus einem zylindrischen Körper 96 mit einer Vielzahl von Längsschlitzen. Es versteht sich, dass statt Schlitzen auch Bohrungen oder andere Durchlässe vorgesehen sein können. Die Schlitzbreite bzw. Maschenweite des Siebs ist ebenfalls so gering, dass das Filtermaterial im Gehäuse zurückgehalten wird. Der Boden 98 des zylindrischen Körpers 96 ist geschlossen. Am oberen Ende ist der zylindrische Körper 96 des Siebeinsatzes 90 aufgeweitet und mit einem nach unten ragenden, umlaufenden Kragen 92 versehen. Am oberen Ende des Kragens 92 ist ein nach außen vorspringender Rand 94 angeformt. Mit dem Kragen 92 wird der Siebeinsatz 90 von oben in die Filterhülse 42 eingesteckt. Zu diesem Zweck weist die Filterhülse 42 eine nach innen ragende Schulter 100 auf. Der Siebeinsatz 90 soweit in die Filterhülse 42 eingesteckt, bis der untere Rand 102 des Kragens auf der Schulter 100 aufliegt. Der Siebeinsatz ragt dann etwas über den oberen Rand der Filterhülse 42 hinaus. Der Kragen 96 bildet somit einen verlängernden Teil der Filterhülse 42. Wenn die Filterhülse 42 nach unten in die Rückspülstellung bewegt wird, liegt der Rand 94 auf der Oberseite des Anschlags 50 an. Dabei wird die Verbindung zwischen Heizkreislauf und Frischwasserzufuhr geschlossen. Es kann während der Rückspülung kein Frischwasser in den Heizkreislauf gelangen. Dies ist in Figur 7 dargestellt. Die Zirkulation im Heizkreislauf ist unterbrochen, aber die Pumpe braucht für den Rückspülvorgang nicht abgestellt werden.

Der zylindrische Körper des Siebeinsatzes 90 bildet einen Hohlraum. In den Hohlraum ist eine langgestreckte Schutzhülle 106 eingesteckt. In der Schutzhülle 106 sitzt ein Permanentmagnet 108. Durch die Wirkung des Permanentmagneten 108 können sich magnetisierbare und magnetische Partikel an der Schutzhülle 106 anlagern. Der Permanentmagnet 108 selber bleibt in der Schutzhülle 106 trocken und rostet nicht. Die Schutzhülle 106 ist an einen Stopfen 110 angeformt. Der Stopfen 110 verschließt eine obere Gehäuseöffnung des Gehäuses 18. Der Permanentmagnet 108 ist auf diese Weise von außen zugänglich und kann mit einem Griff 112 leicht entfernt werden. Dann fallen anhaftende Partikel von der Schutzhülle 106 ab und und werden bei der Rückspülung nach außen mitgerissen. Figur 1 zeigt die Anordnung mit eingestecktem Magnet 108. Figur 7 zeigt die Situation ohne Magnet. Der Vorteil bei dieser Anordnung ist es, dass der Magnet von außen zugänglich ist ohne das Gehäuse öffnen zu müssen und ohne störend in die Strömung einzugreifen. Der Magnet liegt ferner stromabwärts des Filtermaterials. Es haften also nur sehr feine Partikel an, so dass die filternde Wirkung des Magneten lange erhalten bleibt.

In der in Figur 1 dargestellten Betriebsstellung verläuft die Strömung, repräsentiert durch Pfeile 80, vom Einlass 14 außen im Zwischenraum 46 nach unten, durch den Übergang 56 und die Lochplatte 62. Das Wasser fließt dann von unten nach oben durch das Filtermaterial und durch das Sieb 90 hindurch in den Ringraum 116 und zum Auslass 16.

Wenn der Kugelhahn 28 geöffnet wird, ergibt sich eine Situation, wie sie in Figur 7 dargestellt ist. Durch nach unten durch den Ablauf 26 abfließendes Wasser wird eine Strömung nach unten und ein Unterdruck erzeugt. Dadurch entsteht ein Differenzdruck. Durch den Differenzdruck wird die Filterhülse 42 entgegen der Federkraft der Feder 70 nach unten gedrückt bis der Rand 52 auf der Schulter 54 aufliegt. Das Wasser kann dann nicht mehr vom Zwischenraum 46 von unten in die Filterhülse 42 gelangen. Der Übergang 56 (Fig.1) und damit der Einlass 14 ist geschlossen. Die Zirkulation im Heizkreislauf wird unterbrochen.

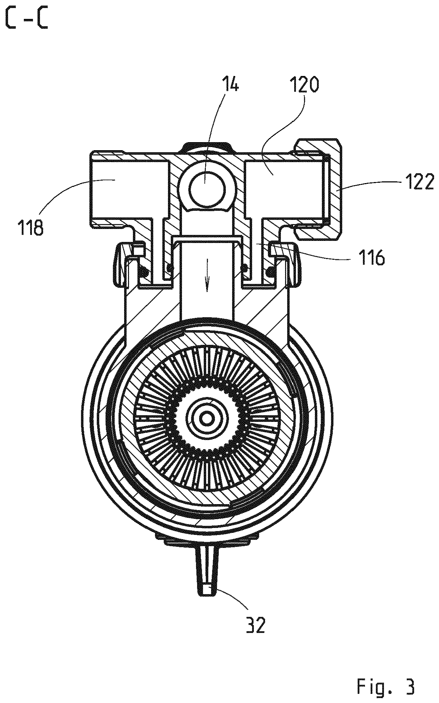

Am oberen Ende löst sich der Rand 48 vom Anschlag 50 nach unten. Der Rand 94 liegt in der Rückspülstellung oben auf dem Anschlag 50 an. Durch einen Frischwassereinlass 118 fließt Frischwasser in den Ringraum 116. Dies ist in Figur 3 zu erkennen. Je nach Einbaurichtung kann das Frischwasser auch durch einen koaxialen Frischwassereinlass 120 in den Ringraum 116 geleitet werden. In der vorliegenden Darstellung ist der Frischwassereinlass 120 mit einem Stopfen 122 verschlossen. Vom Ringraum 116 gelangt das Frischwasser von oben in die Filterhülse 42. Das Filtermaterial 58 wird in umgekehrter Richtung von oben nach unten durchströmt. Dies ist durch Pfeile 124 dargestellt. Dabei nimmt das Wasser Partikel mit, welche zuvor im Betriebszustand vom Filter im Filtermaterial 58 oder am Magneten zurückgehalten wurden. Das Wasser fließt aus der Filterhülse durch die Lochplatte 62 zum geöffneten Ablauf. Auch Partikel, welche sich im Bodenbereich 78 des unteren Gehäuseteils gesammelt haben, fließen durch den Ablauf ab.

Die Rückspülung des Filters wird durch eine einfache Betätigung des Kugelhahns ausgelöst und beendet. Weitere Absperrungen sind nicht erforderlich. Die Anordnung ist daher besonders leicht zu bedienen. Eine fehlerhafte Bedienung, etwa weil die falsche Reihenfolge durchgeführt wurde, ist ausgeschlossen. Während des Rückspülvorgangs ist der Übergang vom Frischwassereinlass 118 und dem Ringraum 116 zum Heizkreislauf geschlossen, weil der Rand 94 auf dem Anschlag 50 aufliegt.

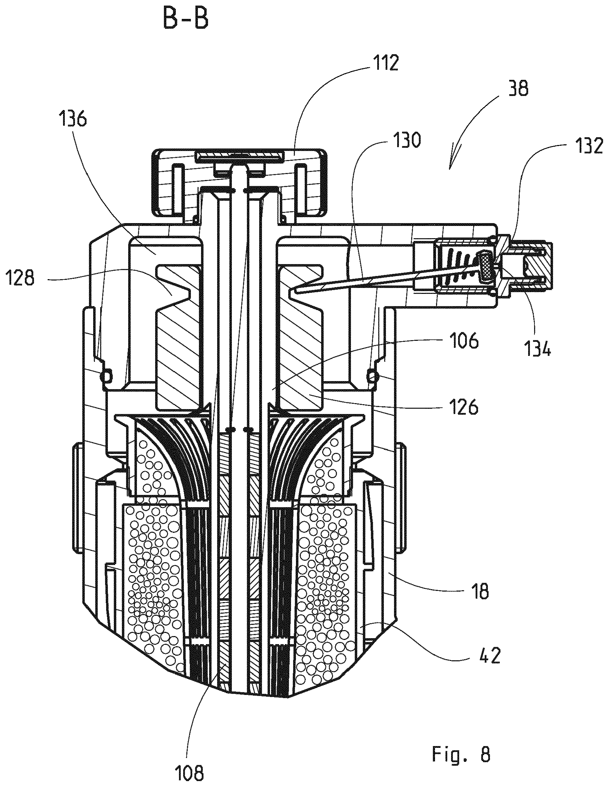

Im Stopfen 110 ist ein Schwimmer 126 angeordnet. Der Schwimmer 126 weist eine vertikale Längsbohrung auf, mit der er auf der Schutzhülle 106 axialbeweglich geführt ist. Dies ist in Figur 8 im Detail dargestellt. Im oberen Bereich weist der Schwimmer 126 eine umlaufende Ringnut 128 auf. Ein Hebel 130 greift in die Ringnut 128 ein. Der Hebel 130 weist am gegenüberliegenden Ende einen federbeaufschlagten Verschluss 132 für eine Entlüftungsöffnung 134 auf. Wenn sich in der Kammer 136 oberhalb des Filtermaterials Luft ansammelt, bewegt sich der Schwimmer 126 mit dem Hebelende nach unten. Dabei wird der Verschluss 132 verkippt, wie dies in Figur 8 dargestellt ist. Durch das Ankippen des Verschlusses 132 öffnet die Entlüftungsöffnung 134. Die Gase können aus der Kammer 136 entweichen.

Die Anordnung eignet sich sowohl für die Entgasung, als auch für die Reinigung des Wassers und ist besonders einfach und kostengünstig aufgebaut.

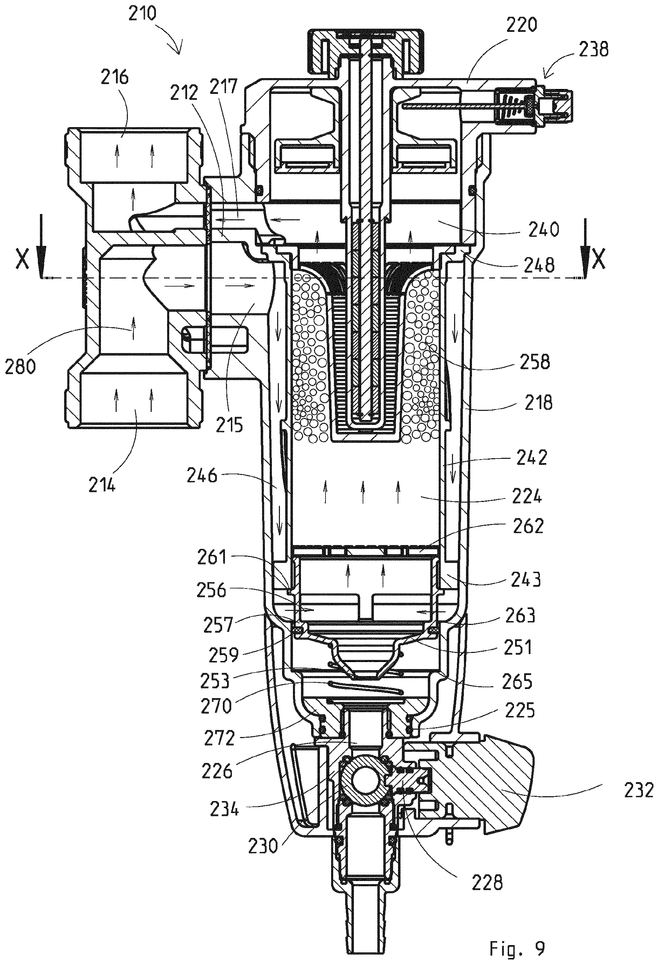

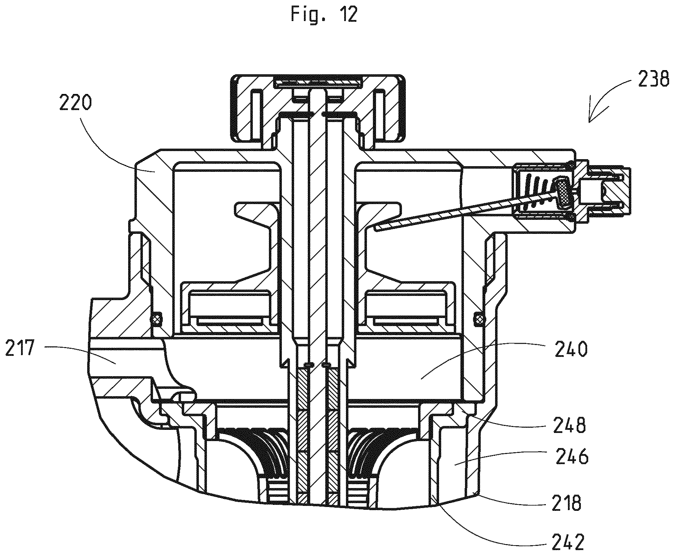

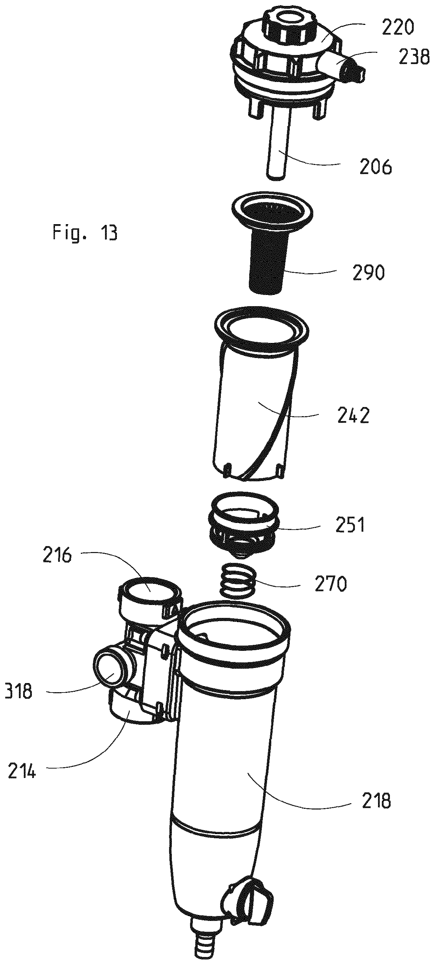

### 2. Ausführungsbeispiel Fig. 9 bis 14

Figur 9 zeigt einen Heizungsfilter entsprechend einem 2. Ausführungsbeispiel, der allgemein mit 210 bezeichnet ist. Der Heizungsfilter 210 wird mit einem Anschlussflansch 212 an einen (nicht dargestellten) geschlossenen Heizkreislauf angeschlossen. Der Anschlussflansch 212 weist einen Einlass 214 auf. Der Einlass 214 wird mit der Rohrleitung des Heizkreislaufs verbunden. Koaxial zum Einlass 214 ist ein Auslass 216 vorgesehen. Der Auslass 216 wird über einen geeigneten Anschlussflansch ebenfalls mit der Rohrleitung des Heizkreislaufs verbunden. Der Heizkreislauf ist ansonsten abgeschlossen. Er weist eine Pumpe auf, mit welcher das Heizungswasser in dem Kreislauf umgepumpt wird. Wasserverluste werden über eine geeignete Füll- und Nachfüllarmatur ausgeglichen.

Einlass 214 und Auslass 216 münden in einem Filtergehäuse 218 aus Kunststoff. Das Filtergehäuse 218 ist anders als das Filtergehäuse des 1. Ausführungsbeispiels einteilig ausgebildet. Der von dem Filtergehäuse 218 gebildete Hohlraum 224 ist im wesentlichen zylindrisch mit vertikaler Achse. Im Boden 225 des Filtergehäuses 218 ist ein Ablauf 226 gebildet. Der Ablauf 226 ist mit einem Kugelventil 228 verschließbar. Das Kugelventil 228 umfasst eine Kugel 230, welche mittels eines Stellgriffs 232 um eine horizontale Achse in der Darstellungsebene drehbar ist. Das Kugelventil 228 ist in ein eigenes Bauteil 234 integriert, welches mittels eines Einsatzes 272 am Filtergehäuse 218 befestigt ist.

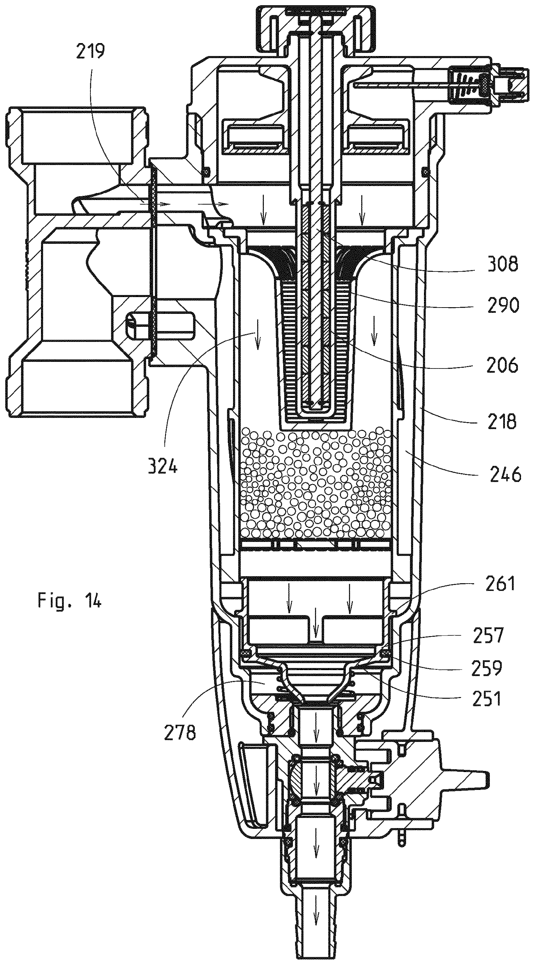

In den oberen Bereich des Filtergehäuses 218 ist ein Deckel 220 eingeschraubt und mit einer Dichtung abgedichtet. In dem Deckel 220 ist ein Entlüftungsventil in Form eines Schnellentlüfters 238 vorgesehen. Dies ist in Figur 14 im Detail dargestellt. Gas, welches sich in der mit dem Auslass verbundenen Kammer 240 sammelt, kann auf diese Weise an die Atmosphäre abgegeben werden.

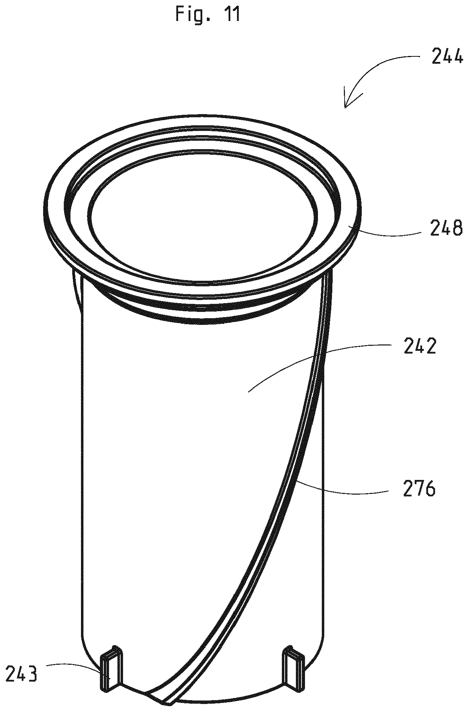

Innerhalb des Filtergehäuses 218 ist koaxial eine Filterhülse 242 angeordnet. Die Filterhülse 242 ist im wesentlichen zylindrisch. Die Filterhülse ist in Figur 11 noch einmal gesondert dargestellt. Am oberen Ende 244 ist die Filterhülse 242 mit einem umlaufenden, nach außen vorspringenden Rand 248 versehen. Der Durchmesser der Filterhülse 242 ist so ausgebildet, dass ein Zwischenraum 246 zwischen der Innenwandung des Filtergehäuses 218 und der Außenwandung der Filterhülse 242 gebildet ist (Fig.9). Die Filterhülse 242 ist in axialer Richtung kürzer als die Länge des von dem Filtergehäuse 218 gebildeten Hohlraum 224. Wie in Figur 1 dargestellt, ist die Filterhülse 242 mit dem oberen Rand 248 fest zwischen einer Schulter 250 und dem unteren Rand des Deckels 220 eingeklemmt. Anders als die Filterhülse 42 des ersten Ausführungsbeispiels ist die Filterhülse 242 somit nicht beweglich, sondern gehäusefest fixiert. 4 kleine, in radialer Richtung außen vorspringende Flügel 243 (Fig.11) ragen bis zur Innenseite des Filtergehäuses 218. Auf diese Weise wird die Position der Filterhülse 242 sehr genau definiert.

Der obere Rand 248 der Filterhülse 242 grenzt an das Innere des Filtergehäuses 218 oberhalb des zentralen Einlasskanals 215, der den Einlass 214 mit dem Inneren des Filtergehäuses 218 verbindet. Der Bereich 240 oberhalb des oberen Randes 248 der Filterhülse 242 ist über einen für solche Flansche bekannten Ringkanal 217 mit dem Auslass 216 verbunden. Es kann kein Wasser direkt vom Einlass 214 zum Auslass 216 fließen. Die Strömung ist an dieser Stelle unterbrochen. Alles Wasser fließt vom Einlass 214 durch den nachstehend beschriebenen Filter zum Auslass 216.

Die Filterhülse 242 ist nach unten hin offen. Im unteren Bereich der Filterhülse 242 ist ein Hubteil 251 verschieblich geführt. Das Hubteil 251 hat einen nach unten trichterförmig zulaufenden Boden mit einer Öffnung 253, die oberhalb des Auslasses 226 angeordnet ist. Die Öffnung 253 hat einen wesentlich kleineren Durchmesser als die Filterhülse 242. Außen an dem Hubteil ist am oberen Rand ein Ringvorsprung 255 angeformt. Der Ringvorsprung 255 dichtet unabhängig von der axialen Lage des Hubteils 251 den Innenraum der Filterhülse 242 und des Hubteils 251 gegenüber dem Ringraum 246 ab.

Weiterhin hat das Hubteil einen Ringvorsprung 261 im mittleren Bereich und einen Ringvorsprung 257 unmittelbar oberhalb des Bodens. Der Ringvorsprung 257 weist eine Ringnut auf, in der eine Dichtung 259 angeordnet ist. Das Filtergehäuse 218 läuft im unteren Bereich ebenfalls trichterförmig zu und bildet zwei Schultern, eine obere Schulter 263 und eine untere Schulter 265. Die obere Schulter 263 bildet einen Anschlag bei einer Abwärtsbewegung des Hubelements für den Ringvorsprung 261. Zwischen den Schultern 263 und 265 hat das Filtergehäuse einen Bereich mit dem gleichen Durchmesser. In diesem Bereich läuft die Dichtung 259 in dem Ringvorsprung 257 bei axialen einer Hubbewegung des Hubelements 251. An Unterseite des Hubteils 251 stützt sich eine Feder 270 ab. Als Federwiderlager für die Feder 270 dient ein Einsatz 272 im Boden des Filtergehäuses 218. Die Feder 270 drückt das Hubteil 251 nach oben.

Zwischen dem mittleren Ringvorsprung 261 des Hubelements 251 und der Ringschulter 263 des Filtergehäuses 218 ist in der Betriebsstellung, die in Figur 1 dargestellt ist, ein Übergang 256 zum Innenraum des Hubelements 251 gebildet. Hierfür weist das Hubelement 251 unterhalb des mittleren Ringvorsprungs 261 mehrere Öffnungen in Umfangsrichtung auf. Wasser, welches vom Einlass 214 in das Gehäuse fließt, fließt also durch den Zwischenraum 246, der die Form eines Ringraums hat, nach unten und durch den Übergang 256 seitlich in das Hubelement 251 und anschließend von unten in die Filterhülse 242.

In der Filterhülse 242 ist ein Filtermaterial aus verwirbelbarem Filtermaterial in Form von Granulat 258 angeordnet. Das Granulat 258 besteht aus vielen kleinen Kunststoffkügelchen geringer Dichte, die im Wasser an der Oberfläche schwimmen. Unter der Bezeichnung "Ultrabead" vertreibt die Beyersdörfer GmbH auf der Internetseite www.koiteich.de einen Teichfilter mit Filtermaterial in Form von schwimmenden Filterkugeln, die als "beads" bezeichnet werden. Derartige Beads werden im vorliegenden Ausführungsbeispiel als Filtermaterial verwendet. Ihre Wirkung ist aus dem Stand der Technik bekannt und braucht hier daher nicht näher beschrieben werden.

Im unteren Bereich der Filterhülse 242 ist eine Lochplatte 262 eingefügt. Mit der Lochplatte 262 wird das Filtermaterial während des Rückspülvorgangs zurückgehalten.

Auf der Außenseite der Filterhülse 242 sind Rippen 276 angeformt. Diese sind in Figur 11 gut zu erkennen. Die Rippen 276 verlaufen auf der Außenseite der Filterhülse 242 schraubenlinienförmig nach unten um die Filterhülse 242 herum. Die Strömung vom Einlass nach unten wird auf diese Weise etwas in Rotation um die gemeinsame Symmetrieachse der Komponenten versetzt. Grobe Partikel werden dadurch nach außen und unten geschleudert. Sie sammeln sich wie beim Ausführungsbeispiel 1 oberhalb des Ablaufs in dem Hohlraum 278, in welchem auch die Feder 270 angeordnet ist. Schwerere Teilchen werden dabei bereits vor Erreichen des Filtermaterials aufgrund der Zentrifugalkraft an die Gehäusewandung gedrückt und sammeln sich dort. Sie sind dann leichter zu entfernen.

In die Filterhülse 242 ist ein Siebeinsatz 290 und eine Schutzhülle 206 mit Permanentmagnet 308 eingesteckt. Diese sind identisch zu den Komponenten des ersten Ausführungsbeispiels und braucht daher hier nicht erneut beschrieben werden.

In der in Figur 9 dargestellten Betriebsstellung verläuft die Strömung, repräsentiert durch Pfeile 280, vom Einlass 214 außen im Zwischenraum 246 nach unten, durch den Übergang 256 und die Lochplatte 262. Das Wasser fließt dann von unten nach oben durch das Filtermaterial und durch das Sieb 290 hindurch in den Ringraum 217 und zum Auslass 216.

Wenn der Kugelhahn 228 geöffnet wird, ergibt sich eine Situation, wie sie in Figur 14 dargestellt ist. Durch nach unten durch den Ablauf 226 abfließendes Wasser wird eine Strömung nach unten und ein Unterdruck erzeugt. Dadurch entsteht ein Differenzdruck. Durch den Differenzdruck wird das Hubelement 251 entgegen der Federkraft der Feder 270 nach unten gedrückt bis der Ringvorsprung 261 auf der Schulter 263 aufliegt. Das Wasser kann dann nicht mehr vom Zwischenraum 246 seitlich in das Hubelement 251 und von unten in die Filterhülse 242 gelangen. Der Übergang 256 (Fig.1) und damit der Einlass 214 ist geschlossen. Es kann während der Rückspülung kein Frischwasser in den Heizkreislauf gelangen. Dies ist in Figur 14 dargestellt. Die Zirkulation im Heizkreislauf ist unterbrochen, aber die Pumpe braucht für den Rückspülvorgang nicht abgestellt werden.

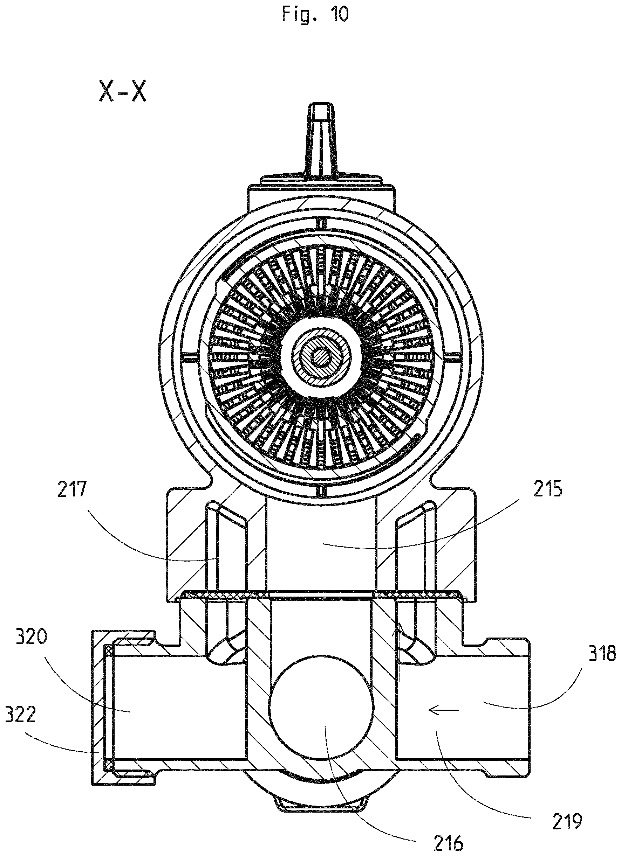

Am oberen Ende fließt durch einen Frischwassereinlass 318 Frischwasser in den Ringraum 217. Dies ist durch Pfeile 219 repräsentiert und in Figur 10 zu erkennen. Je nach Einbaurichtung kann das Frischwasser auch durch einen koaxialen Frischwassereinlass 320 in den Ringraum 217 geleitet werden. In der vorliegenden Darstellung ist der Frischwassereinlass 320 mit einem Stopfen 322 verschlossen. Vom Ringraum 217 gelangt das Frischwasser von oben in die Filterhülse 242. Das Filtermaterial 258 wird in umgekehrter Richtung von oben nach unten durchströmt. Dies ist durch Pfeile 324 dargestellt. Dabei nimmt das Wasser Partikel mit, welche zuvor im Betriebszustand vom Filter im Filtermaterial 258 oder am Magneten zurückgehalten wurden. Das Wasser fließt aus der Filterhülse durch die Lochplatte 262 zum geöffneten Ablauf. Auch Partikel, welche sich im Bodenbereich 278 des unteren Gehäuseteils gesammelt haben, fließen durch den Ablauf ab.

Die Rückspülung des Filters wird durch eine einfache Betätigung des Kugelhahns ausgelöst und beendet. Weitere Absperrungen sind nicht erforderlich. Die Anordnung ist daher besonders leicht zu bedienen. Eine fehlerhafte Bedienung, etwa weil die falsche Reihenfolge durchgeführt wurde, ist ausgeschlossen. Sowohl während des Betriebs, als auch während des Rückspülvorgangs ist der Übergang vom Frischwassereinlass 318 und dem Ringraum 217 zum Heizkreislauf geschlossen.

Anders als beim ersten Ausführungsbeispiel wird nicht die gesamte Filterhülse 242 bewegt, sondern lediglich ein Hubelement 251 im unteren Bereich. Dadurch ist der obere Rand der Filterhülse fest. Das Hubelement 251 hat einen kleineren Durchflussquerschnitt für die Strömung bei gleichem sonstigen Querschnitt. Die Kraft, die auf das Hubelement beim Öffnen des Kugelhahns wirkt, ist daher größer als bei der Lösung des ersten Ausführungsbeispiels.

Im übrigen ist die Funktionsweise, auch die Entlüftungsfunktion der Anordnung genauso, wie beim ersten Ausführungsbeispiel und braucht daher nicht näher beschrieben werden.

## Patentansprüche

1. Rückspülbarer Heizungsfilter (10), enthaltend
(a) ein in einen Heizkreislauf integrierbares, geschlossenes Gehäuse (18, 20; 218) mit jeweils einem mit dem Heizkreislauf verbundenen Einlass (14; 214) und Auslass (16; 216) und mit einem absperrbaren Ablauf (26; 226);
(b) eine in dem Gehäuse angeordnete, im Wesentlichen zylindrische Filterhülse (42; 242), deren Durchmesser derart ausgewählt ist, dass zwischen der Filterhülse und dem Gehäuse ein mit dem Einlass in Verbindung stehender Zwischenraum (46, 246) gebildet ist, und
(c) in der Filterhülse (42; 242) befindliches Filtermaterial (58; 258) zur Entfernung von Partikeln aus dem in einer Betriebsstellung durch den Heizkreislauf und vom Einlass durch den Zwischenraum und über einen Übergang anschließend durch das Filtermaterial durch den Heizungsfilter fließenden Wasserstrom,
(d) wobei die Filterhülse (42) oder ein in der Filterhülse (242) angeordnetes Hubelement (251) in Längsrichtung axialbeweglich zwischen zwei Anschlägen (50, 54; 263, 262) angeordnet und von der Betriebsstellung in eine Rückspülstellung bewegbar ist;
**dadurch gekennzeichnet, dass**
(e) der Übergang (56; 256) vom Zwischenraum (46; 246) zum Innenraum der Hülse (42; 242) in der Rückspülstellung blockiert ist;
(f) das Filtermaterial (58; 258) von einem Granulat, von Kügelchen oder anderem verwirbelbaren Material gebildet ist, dessen Dichte geringer als die Dichte von Wasser ist, so dass das Material an der Wasseroberfläche schwimmt,
(g) das Gehäuse mit einem Frischwassereinlass (118; 318) für Frischwasser von einer Frischwasserversorgung versehen ist, und
(h) in der Rückspülstellung die Verbindung von der Frischwasserversorgung zum Heizkreislauf unterbrochen ist und gleichzeitig Frischwasser vom Frischwassereinlass in einer gegenüber der Strömungsrichtung des Wassers in der Betriebsstellung umgekehrten Richtung durch das Filtermaterial zum Ablauf leitbar ist.

2. Heizungsfilter nach Anspruch 1, **dadurch gekennzeichnet, dass** ein unterer Anschlag (54; 263) von einer nach innen vorspringenden, umlaufenden Ringschulter auf der Innenseite des Gehäuses (18; 218) gebildet ist, auf der der untere Rand (52) der Filterhülse (42) oder ein Ringvorsprung (261) des Hubelements (251) in der Rückspülstellung aufliegt.

3. Heizungsfilter mit einem axialbeweglich in der Filterhülse (242) angeordneten, axialbeweglichen Hubelement (251) nach Anspruch 1 oder 2, **dadurch gekennzeichnet, dass**
(a) der obere Teil des Hubelements (251) oberhalb eines außen umlaufenden Ringvorsprungs (261) den Innenraum der Filterhülse (242) und des Hubelements (251) über den gesamten Hub von dem Zwischenraum (246) trennt,
(b) Öffnungen (256) im unteren Bereich unterhalb des außen umlaufenden Ringvorsprungs (261) vorgesehen sind, welche die Verbindung (256) zwischen Zwischenraum (246) und dem Inneren des Hubelements (251) herstellen; und
(c) der außen umlaufende Ringvorsprung in der Rückspülstellung auf einer Gehäuseschulter aufliegt, wodurch die Verbindung zwischen dem Zwischenraum und dem inneren des Hubelements getrennt wird.

4. Heizungsfilter nach einem der vorgehenden Ansprüche 1 oder 2 mit einer axialbeweglichen Filterhülse, **dadurch gekennzeichnet, dass** die Filterhülse (42) einen Doppelsitz bildet, mit dem in der Betriebsstellung die Verbindung zwischen Einlass und Auslass (16) und in der Rückspülstellung die Verbindung zwischen Einlass und Frischwasserversorgung (118, 120) blockierbar ist.

5. Heizungsfilter nach Anspruch 4, **dadurch gekennzeichnet, dass**
(a) der mit dem Heizkreislauf verbundene Einlass (14) seitlich am Gehäuse (18) vorgesehen ist und im Zwischenraum (46) zwischen Filterhülse (42) und Gehäuse (18) mündet,
(b) die Passage (116) von der Frischwasserversorgung (118, 120) zum Innenraum der Filterhülse (42) oberhalb des Einlasses angeordnet ist, und
(c) der Doppelsitz der Filterhülse (42) von zwei beabstandeten, umlaufenden, nach außen vorspringenden Rändern (48, 94) gebildet ist, von denen der eine axial im Bereich des Einlasses unterhalb der Passage und der andere am oberen Ende der Filterhülse im Bereich der Passage angeordnet ist.

6. Heizungsfilter nach einem der vorgehenden Ansprüche, **dadurch gekennzeichnet, dass** ein im wesentlichen zylindrisches Sieb (90) zum Zurückhalten des Filtermaterials im Innenraum der Filterhülse angeordnet ist.

7. Heizungsfilter nach einem der vorgehenden Ansprüche, **dadurch gekennzeichnet, dass** ein Magnet (108) vorgesehen ist, dessen Magnetfeld sich in den Bereich stromabwärts des Filtermaterials erstreckt.

8. Heizungsfilter nach Anspruch 7, **dadurch gekennzeichnet, dass** eine nicht abschirmende Schutzhülle (106) vorgesehen ist, in welche der Magnet von außen lösbar einsteckbar ist.

9. Heizungsfilter nach einem der vorgehenden Ansprüche, **dadurch gekennzeichnet, dass** eine Entlüftung (38; 238) mit einer Öffnung im oberen Bereich des Gehäuses vorgesehen ist.

10. Heizungsfilter nach Anspruch 8 und 9, **dadurch gekennzeichnet, dass** die Öffnung der Entlüftung durch einen Schwimmer (126) aktivierbar ist, welcher von der Schutzhülle (106) axialbeweglich geführt wird.

## Claims

1. Backflow-heating-filter (10), comprising
(a) a closed housing (18, 20; 218) adapted to be integrated into a heating circuit, the housing having an inlet (14; 214) and an outlet (16; 216) each of which being connected to the heating circuit and a closable drain (26; 226);
(b) an essentially cylindric filter sleeve (42; 242) arranged inside the housing, the filter sleeve having a diameter which is selected such that an intermediate space (46, 246) is formed between the filter sleeve and the housing which is connected to the inlet, and
(c) filter material (58; 258) inside the filter sleeve (42; 242) for removing particles from the water flow flowing in an operating state through the heating circuit and from the inlet through the intermediate space and via a transition through the filter material of the heating filter,
(d) wherein the filter sleeve (42) or a lifting element (251) provided inside the filter sleeve (242) is moveable in an axial direction between two stops (50, 54; 263, 262) and which can be moved from an operating state to a backflow state;
**characterized in that**
(e) the transition (56; 256) from the intermediate space (46; 246) to the inside of the sleeve (42; 242) is blocked in the backflow state;
(f) the filter material (58; 258) is formed by granulate, balls or other swirlable material having a density which is smaller than the density of water whereby the material will swim at the water surface,,
(g) the housing is provided with a fresh water inlet (118; 318) for fresh water from a fresh water supply, and
(h) the connection from the fresh water supply to the heating circuit is interupted in the backflow state while fresh water from the fresh water supply can be flowed through the filter material to the drain in a direction opposite to the direction of the water flow in the operating state.

2. Heating filter according to claim 1, **characterized in that** a lower stop (54; 263) is formed by an annular shoulder projecting towards the inside on the inside of the housing (18; 218) supporting the lower edge (52) of the filter sleeve (42) or an annular projection (261) of the lifting element (251) in the backflow state.

3. Heating filter with a lifting element (251) which is moveable in an axial direction in the filter sleeve according to claim 1 or 2, **characterized in that**
(a) the upper portion of the lifting element (251) above an annular projection (261) on the outside separates the inside of the filter sleeve (242) and of the lifting element (251) along the entire stroke from the intermediate space 246,
(b) openings (256) are provided in the lower range below the outside projecting annular projection (261) establishing the connection (256) between the intermediate space (246) and the inside of the lifting element (251); and
(c) the annular projection on the outside abuts a housing shoulder in the backflow state, whereby the connection between the intermediate state and the inside of the lifting element is separated.

4. Heating filter according to any of the preceding claims 1 or 2 with an axially moveable filter sleeve, **characterized in that** the filter sleeve (42) forms a double seat adapted to block the connection between the inlet and the fresh water supply (118, 120) between the inlet and the outlet (16) in the backflow state.

5. Heating filter according to claim 4, **characterized in that**
(a) the inlet (14) connected to the heating circuit is provided on a side of the housing (18) and ends in the intermediate space (46) between the filter sleeve (42) and the housing (18),
(b) the passage (116) from the fresh water supply (118, 120) to the inside of the filter sleeve (42) is positioned above the inlet, and
(c) the double seat of the filter sleeve (42) is formed by two annular rims (48, 94) projecting towards the outside, one of the rims being positioned axially in the range of the inlet below the passage and the other one at the upper end of the filter sleeve in the range of the passage.

6. Heating filter according to any of the preceding claims, **characterized in that** an essentially cylindric sieve (90) is provided inside the filter sleeve for retaining the filter material.

7. Heating filter according to any of the preceding claims, **characterized in that** a magnet (108) is provided the magnet having a magnetic field extending into the range downstream of the filter material.

8. Heating filter according to claim 7, **characterized in that** a non-shielding protective cover (106) is provided adapted to accomodate the magnet inserted from the outside.

9. Heating filter according to any of the preceding claims, **characterized in that** an air vent (38; 238) is provided with an opening in the upper range of the housing.

10. Heating filter according to claim 8 und 9, **characterized in that** the opening of the air vent can be activated by a floater (126) which is moveably guided in an axial direction by the protective cover (106).

## Revendications

1. Filtre de lavage à contre-courant pour circuit de chauffage (10), comprenant
(a) un boîtier (18, 20 ; 218) fermé, pouvant être intégré dans un circuit de chauffage et muni chacun d'une entrée (14 ; 214) et d'une sortie (16 ; 216) connectées au circuit de chauffage et d'une vidange (26 ; 226) pouvant être verrouillée ;
(b) une cartouche filtrante (42 ; 242) essentiellement cylindrique et disposée dans le boîtier dont le diamètre est choisi de manière à former, entre la cartouche filtrante et le boîtier, un espace intermédiaire (46 ; 246) connecté à l'entrée, et
(c) un matériau filtrant (58 ; 258) se trouvant dans la cartouche filtrante (42 ; 242) et destiné à enlever les particules du courant d'eau traversant, dans une position de service le circuit de chauffage, et depuis l'entrée l'espace intermédiaire en passant par un passage pour traverser finalement le filtre de circuit de chauffage et son matériau filtrant,
(d) la cartouche filtrante (42) ou un élément de levage (251) disposé dans la cartouche filtrante (242) étant disposé dans le sens longitudinal de manière à pouvoir se déplacer axialement entre deux butées (50, 54 ; 263, 262) et pouvant se déplacer depuis la position de service dans une position de lavage à contre-courant ;
**caractérisé en ce que**
(e) le passage (56 ; 256) de l'espace intermédiaire (46 ; 246) vers l'espace intérieur de la cartouche (42 ; 242) est bloqué en position de lavage à contre-courant ;
(f) le matériau filtrant (58 ; 258) est formé de granulés, de petites billes ou d'un autre matériau pouvant tourbillonner dont la densité est inférieure à la densité de l'eau de telle manière que le matériau flotte à la surface de l'eau,
(g) le boîtier est pourvu d'une entrée pour eau claire (118 ; 318) pour l'eau claire venant d'un système d'alimentation en eau claire, et
(h) en position de lavage à contre-courant, la connexion du système d'alimentation en eau claire vers le circuit de chauffage est interrompue et simultanément de l'eau claire venant de l'entré pour eau claire peut être guidée à travers le matériau filtrant vers la vidange dans le sens inverse au sens d'écoulement de l'eau en position de service.

2. Filtre pour circuit de chauffage, selon la revendication 1, **caractérisé en ce qu'**une butée inférieure (54 ; 263) est formée, sur la face intérieure du boîtier (18 ; 218), par un épaulement annulaire s'étendant sur toute la circonférence et saillant vers l'intérieur sur lequel repose le bord inférieur (52) de la cartouche filtrante (42) ou une saillie annulaire (261) de l'élément de levage (251) en position de lavage à contre-courant.

3. Filtre pour circuit de chauffage muni d'un élément de levage (251) pouvant se déplacer axialement et disposé dans la cartouche filtrante (242) de manière à pouvoir se déplacer axialement, selon la revendication 1 ou 2, **caractérisé en ce que**
(a) la partie supérieure de l'élément de levage (251) sépare, au-dessus d'une saillie annulaire (261) s'étendant sur toute la circonférence extérieure, l'espace intérieur de la cartouche filtrante (242) et de l'élément de levage (251) sur toute l'élévation de l'espace intermédiaire (246),
(b) des orifices (256) établissant la connexion (256) entre l'espace intermédiaire (246) et l'intérieur de l'élément de levage (251) sont prévus dans la zone inférieure située en dessous de la saillie annulaire (261) s'étendant sur toute la circonférence extérieure ; et
(c) la saillie annulaire s'étendant sur toute la circonférence extérieure repose en position de lavage à contre-courant sur un épaulement du boîtier, ceci permettant la séparation de la connexion entre l'espace intermédiaire et l'intérieur de l'élément de levage.

4. Filtre pour circuit de chauffage, selon l'une quelconque des revendications précédentes 1 ou 2, muni d'une cartouche filtrante pouvant se déplacer axialement, **caractérisé en ce que** la cartouche filtrante (42) forme un double siège permettant de bloquer, en position de service, la connexion entre l'entrée et la sortie (16) et, en position de lavage à contre-courant, la connexion entre l'entrée et le dispositif d'alimentation en eau claire (118, 120).

5. Filtre pour circuit de chauffage, selon la revendication 4, **caractérisé en ce que**
(a) l'entrée (14) connectée au circuit de chauffage est prévue latéralement sur le boîtier (18) et débouche dans l'espace intermédiaire (46) entre la cartouche filtrante (42) et le boîtier (18),
(b) le passage (116) allant du dispositif d'alimentation en eau claire (118, 120) vers l'espace intérieur de la cartouche filtrante (42) est disposé au-dessus de l'entrée, et
(c) le double siège de la cartouche filtrante (42) est formé par deux bords (48, 94) saillant vers l'extérieur, s'étendant sur toute la circonférence et écartés l'un de l'autre, dont l'un est disposé axialement dans la zone de l'entrée en dessous du passage et l'autre à l'extrémité supérieure de la cartouche filtrante dans la zone du passage.

6. Filtre pour circuit de chauffage, selon l'une quelconque des revendications précédentes, **caractérisé en ce qu'**un filtre (90) essentiellement cylindrique destiné à retenir le matériau filtrant est disposé dans l'espace intérieur de la cartouche filtrante.

7. Filtre pour circuit de chauffage, selon l'une quelconque des revendications précédentes, **caractérisé en ce qu'**il est prévu un aimant (108) dont le champ magnétique s'étend dans la zone en aval du matériau filtrant.

8. Filtre pour circuit de chauffage, selon la revendication 7, **caractérisé en ce qu'**il est prévu une gaine de protection (106) non blindée dans laquelle l'aimant peut être inséré en pouvant être enlevé depuis l'extérieur.

9. Filtre pour circuit de chauffage, selon l'une quelconque des revendications précédentes, **caractérisé en ce qu'**il est prévu une aération (38 ; 238) munie d'un orifice dans la zone supérieure du boîtier.

10. Filtre pour circuit de chauffage, selon la revendication 8 ou 9, **caractérisé en ce que** l'ouverture de l'aération peut être activée par un flotteur (126) guidé par la gaine de protection (106) de manière à pouvoir se déplacer axialement.
